# EUROPÄISCHE PATENTANMELDUNG

(11) **EP 2 175 227 A1**
(43) Veröffentlichungstag der Anmeldung: **14.04.2010**
(21) Anmeldenummer: 09161306.7
(22) Anmeldetag: 27.05.2009
(51) Int. Cl.: G01B 3/56

(54) **Zweischenkliger Winkelmesser**

(30) Priorität: 27.05.2008 DE 102008025192
(71) Anmelder: Hoffmann, Herr Gerhard G.K., 80937 München (DE)
(72) Erfinder: Hoffmann, Herr Gerhard G.K., 80937 München (DE)
(74) Vertreter: Farago, Peter Andreas

(57) **Zusammenfassung**

Die Erfindung betrifft eine ZweischenkligernWinkelmesser der folgendes umfasst: zwei Messschenkel (1,2/Fig q) mit denen die zu messenden Winkel abgegriffen werden, ein Brückenelement (3/Fig a,b,c,q) mit zwei Köpfen, das beide Messschenkel (1,2/Fig a,q) miteinander verbindet und für die Bildung von Winkeln verantwortlich ist, zwei Zahnkranzfragmente (4,5/Fig a,b,c,q), die auf den Schenkelachsen und an dem Brückenelement (3/Fig a,b,c,q) angebracht sind und zusammen mit zwei Präzisionspotentiometern (7,8/Fig a,q) die die relative Bewegung zwischen Brückenelement (3/Fig a,b,c,q) und den Messschenkeln (1,2/Fig a,q) messbar machen, in jedem Messschenkel (1,2/Fig a,q) einen Stellradmechanismus (16,17/Fig a,e,q) mit dem die gewünschte Winkelzahl von Hand feinjustiert wird, einen Prozessor (37), das die ermittelten Messwerte bearbeitet und an die Displays (38/Fig a) weiterleitet, mindestens ein Display (38/Fig a) zum Darstellen des ermittelten Winkelwertes, in jedem Messschenkel (1,2/Fig a,q) einen Achsenkern zur Dämpfung der relativen Bewegung der Achsen, ein Batteriefach zur Unterbringung der Stromquelle (36/54) mindestens zwei Standhilfen (9/Fig a,d,q), mindestens zwei Nockenpunkte (12/Fig c,q), die an der Stirnleiste (13/c,q) der Zahnkranzfragmente (4,5/Fig a,b,c) angebracht sind und in die die Standhilfen (9/Fig a,d,q) einrasten, wenn sie den Nockenpunkt (12/c,q) auf einem Majorwinkel erreichen und ausrasten, wenn sie ihn wieder verlassen, und an jedem Messschenkel (1,2/Fig a q) eine Walze (39/Fig q) mit der er über die Lauffläche (41) des anderen abrollt.

## Beschreibung

Nach dem heutigen Stand der Technik sind zweischenklige Winkelmesser so gebaut, dass sich das Winkelzentrum desto weiter von der Winkelachse entfernt, je kleiner der gemessene Winkel wird. So verhält es sich auch bei GM G 87 14 136.1, GM 689 02 987.9, GM G 9204839 und GM 20 2005 001 517.2. Sinnvoll ist es, mit einem Winkelmesser spitze und stumpfe Winkel messen und beide Schenkel über die gesamte Länge zum Messen am Objekt anlegen zu können.

Mit der Erfindung "zweischenkliger Winkelmesser" kann dem entsprochen werden. Die Erfindung eignet sich insbesondere zur Anwendung auf Baustellen sowie auch in handwerklichen Berufen, zur Verwendung in Werkstätten, für den Heimwerker und die Vermessungstechnik.

Zwei Schenkel **a** / **b** (1,2/Fig a,q) sind durch ein Brückenelement (3/Fig a,b,c,q) miteinander verbunden. Die besondere Ausgestaltung des Brückenelementes (3/ Fig a,b,c,q) ist verantwortlich für die Bildung der Winkel. Dadurch, dass die direkte Gerade zwischen den beiden Winkelachsen (14,15/Fig b) zugleich auch die kürzere Stegseite des Brückenelementes (3/Fig a,b,c,q) darstellt, ist es möglich, das Winkelzentrum zu umgehen und durch koordinierte Bewegung von Schenkeln (1,2/Fig a,q) und Brückenelement (3/Fig a,b,c,q), spitze und stumpfe Winkel in unmittelbarer Nähe von zwei Winkelachsen (14,15/Fig b) zu bilden. Im Inneren der Schenkel **a** / **b** (1,2/Fig a,q), an den beiden Brückenköpfen, die die beiden Winkelachsen (14,15/ Fig b) umfassen, ist jeweils ein Zahnkranzfragment (4,5/Fig a,b,c) angebracht. Im Zusammenwirken mit jeweils einem Präzisionspotentiometer (7,8/Fig a,q) kann mit ihnen ein Gesamtwinkelmass von 225° Grad gemessen werden. Im Inneren des Brückenelementes (3, Fig a,b,c,q) verlaufen die notwendigen elektrischen Leitungen, über die die ermittelten Widerstandswerte aus Schenkel **b** in den Prozessor (37) in Schenkel **a** weitergeleitet werden. Der Prozessor (37) wiederum überträgt sie in zwei Displays (38), die wahlweise oder zusammen eingeschaltet werden können und stirn- und rückseitig in Schenkel **a** angebracht sind. Im Inneren der Schenkel **a** / **b** (1,2/Fig a,q) ist ein Stellradmechanismus (16,17/Fig a,e,q) angebracht, mit dem ein angestrebtes Winkelmass von Hand feinreguliert werden kann. Der Stellradmechanismus (16,17/Fig a,e,q) besteht aus einem Stellrad (18/Fig a,e) mit dem der Mechanismus bewegt wird, einer inneren Trommel (22, Fig e), die fest mit dem Stellrad (18/Fig a,e) und der Achse (24/Fig e) des Stellradmechanismus (16,17/Fig a,e,q) verbunden ist, einer äusseren Trommel (21/Fig e), die parallel zur Achse (24/Fig e) beweglich gelagert ist, einer unteren Trommel (23/Fig e), die sowohl parallel zur Achse als auch vertikal zu ihr beweglich und gefedert an ihr befestigt ist, sowie einem Wellenadapter (26/Fig e), der mit einer biegsamen oder Gelenkwelle (31/Fig a,e,q) verbunden ist. Die Achse(24/Fig e), die auf der Seite, an der sich das Stellrad (18/Fig a,e ) befindet in zwei Naben (20/Fig e) gelagert ist, ist auf der anderen Seite, zur Welle (31/Fig a,e,q) hin zu einer Spitze verjüngt und zentriert in den Wellenadapter (26/Fig e) eingestellt. Durch die Bewegung des Stellrades (18/Fig a,e) setzt sich die innere Trommel (22/Fig e) in Bewegung. An ihrer Stirnseite sind ein oder mehrere Vorschubdorne (28/Fig e) in regelmässigen Abständen zueinander angebracht, die die äussere Trommel (21/Fig e) an ihrer gewellten Fase (27/Fig e) entlang vorschieben. Die äussere Trommel (21/Fig e) sitzt mit ihrer Außenseite an der Kapselwand (19/Fig e). Sie ist ausschließlich parallel zur Achse (24/Fig e) beweglich, um die untere Trommel (23/Fig e) in den Wellenadapter (26/Fig e) drücken zu können. An der Innenseite der unteren Trommel (23/Fig e) sind ein oder mehrere Mitnehmer (29/Fig e) angebracht, die zusammen mit dem oder den Fangwinkeln(30/Fig e) an der Außenseite der inneren Trommel (22/ Fig e) die Bewegung des Stellrades (18/Fig a,e) auf die untere Trommel (23/Fig e) und somit auf die biegsame, bzw. Gelenkwelle (31/Fig a,e,q) übertragen, indem der Fangwinkel (30/Fig e) den Mitnehmer (29/Fig e) einfängt, und somit die Bewegung der inneren Trommel (22/Fig e) auf die untere Trommel (23/Fig e) überträgt. Fangwinkel (30/Fig e) und Mitnehmer (29/Fig e) weisen eine pfeilartige Spitze auf, mit denen sie sich gegenüberstehen. Wird die untere Trommel (23/Fig e) vorgeschoben, bewegen sich der oder die Mitnehmer (29/Fig e) an ihrer Innenseite (23) auf den oder die Fangwinkel (30/Fig e) an der Aussenseite der inneren Trommel (22/Fig e) zu. Sie weisen außer der pfeilartigen Spitze seitliche Kerben auf, mit der sie das jeweilige, gegenüberliegende Element aufnehmen. Aufgrund dieser Ausgestaltung können sich beide Elemente nicht gegenseitig blockieren.

Die untere Trommel (23/Fig e) wird durch die Bewegung des Stellrades (18/Fig e) von der äusseren Trommel (21/Fig e) in den Wellenadapter (26/Fig e) gedrückt. Dann dreht man solange in einer Richtung an dem Stellrad (18/Fig a,e), bis der gewünschte Winkel erreicht ist. Wenn der Winkel erreicht worden ist, dreht man das Stellrad (18/Fig a,e) ein kleines Stück in die entgegengesetzte Richtung. Daraufhin rutscht der Mitnehmer (29/Fig e) ab und die untere Trommel (23/Fig e) bewegt sich wieder in den Ruhezustand. Dabei schiebt sie gleichzeitig die äussere Trommel (21/Fig e) zurück.

Die Komponenten Fangwinkel (30/Fig e,g) und Mitnehmer (29/Fig e,g) sind in ihrem Verhältnis zueinander so gestaltet, dass die am Stellrad (18/Fig a,e) angewandte Kraft gleichmäßig auf den Mechanismus wirkt. Dadurch kann ein Winkelwert per Hand von links und von rechts, d.h. von oben und von unten über den Stellradmechanismus (16,17/Fig a,e,q) reguliert werden. Untere Trommel (23/Fig e) und Wellenadapter (26/Fig e) weisen an ihren sich gegenüberliegenden Seiten Zähne (Fig e,h) auf, mit denen sie sich wähnend des Regulierungsvorganges ineinander fügen. Dadurch können sie sich nicht gegenseitig blockieren.

Der Kopf der Welle (31/Fig a,e,q) ist als Zahnkranz (32/Fig a,q) ausgestaltet, der die am Stellrad (18/Fig a,e) angewandte Kraft auf die Zahnkranzfragmente (4,5/Fig a,b,c,q ) überträgt.

Um Reibung bei der Betätigung beider Schenkel gegeneinander vorzubeugen, sind an der Kopfseite beider Schenkel **a** / **b** (1,2/Fig a,q) jeweils eine Walze (39/ Fig q) angebracht, mit denen sie sich auf der Lauffläche (41) des gegenüberliegenden Schenkels abrollen. Desweiteren wird das Brückenelement (3/Fig a,b,c) von einer Staublippe (42/Fig q) geschützt, um Verschmutzungen zu vermeiden und den Wert des Werkzeuges zu erhalten.

### Nockenpunkte und Standhilfen

Durch das Zusammenwirken von Nockenpunkten und Standhilfen wird die Bewegung des Mechanismus koordiniert. An den als Mayorwinkel bezeichneten Punkten 0°,45°,90°,135°,180°und 225° sind in den Stirnleisten (13/Fig c,q) der Zahnkranzfragmente (4,5/Fig a,b,c,q) kleine Vertiefungen, so genannte Nockenpunkte(12/Fig c,q), eingearbeitet, in die in der Ausführung der Bewegung der Schenkel **a** / **b** Standhilfen (9/Fig a,d,q) ein- und ausrasten und dort für Stabilität sorgen. Eine Standhilfe (9/Fig a,d,q) besteht aus einem kleinen Hohlzylinder, in dem eine kleine Spiralfeder (25/Fig d) eine kleine Kugel (11/Fig d) oder einen kleinen Stift mit Kugelkopf gegen die gekröpfte offene Seite des Hohlzylinders (48/Fig d) drückt. Dieser Kugelkopf rastet beim Passieren eines Nockenpunktes (12/Fig c,q) in diesen ein und wieder aus, wenn die Bewegung fortgesetzt wird.

Damit die Koordination gewährleistet ist, müssen die Nockenpunkte (12/Fig c,q) in ihrem Verhältnis zueinander größer oder kleiner, bzw. tiefer oder flacher ausgestaltet sein. Dieses gestaltet sich folgendermassen:

Bei Winkel 0° liegen beide Schenkel **a** / **b** (1,2/Fig a,q) am inneren Anschlag (Fig i). Gleichzeitig sind auch in beiden Schenkeln Nockenpunkte (12/Fig c,q) auf dieser Winkelhöhe angebracht, in die jeweils eine Standhilfe (9/Fig a,d,q) eingerastet ist. Der Nockenpunkt (12/Fig c,q) in Schenkel a (1/Fig a,q) bei 0° ist tiefer als der in Schenkel b (2/Fig a,q), d.h., die Kraft, die aufgebracht werden muß, um aus dem Nockenpunkt in Schenkel a (1/Fig a,q) auszurasten, muß größer sein, um in Schenkel b auszurasten.

Bei Winkel **45°** befindet sich Schenkel **a** noch im inneren 0°Anschlag, während in Schenkel **b** die Standhilfe in einen Nockenpunkt eingerastet ist (Fig k). Der Nockenpunkt in Schenkel **a,** *a0*, ist tiefer als der in Schenkel **b**, *b1*.

Bei Winkel **90°** befindet sich der Nockenpunkt in Schenkel **a,** *a0* immer noch am inneren Anschlag 0° (Fig L). In Schenkel **b** wird auf der Winkelhöhe von 90° ein weiterer Nockenpunkt eingerastet, wenn der äussere Anschlag erreicht worden ist. Der Nockenpunkt *a0* ist tiefer als Nockenpunkt *b2*.

Bei Winkel **135°** rastet die Standhilfe in Schenkel **a** aus dem Nockenpunkt *a0*, dem inneren Anschlag, aus und in den Nockenpunkt *a1* ein (Fig m). In Schenkel **b** bleiben der Anschlag **b** und Nockenpunkt *b2* währenddessen beibehalten. Nockenpunkt *b2* ist tiefer als Nockenpunkt *a1*.

Bei Winkel **180°** wird in Schenkel **a** der Nockenpunkt *a2* eingerastet (Fig n). In Schenkel **b** bleibt der äussere Anschlag und Nockenpunkt *b2* dabei erhalten. Nockenpunkt *b2* ist tiefer als Nockenpunkt *a2*.

Bei Winkel **225°** wird in Schenkel **a** der Nockenpunkt *a3* eingerastet (Fig o). In Schenkel **b** bleibt der äussere Anschlag **b** und Nockenpunkt *b2* dabei erhalten und Schenkel **a** erreicht den äusseren Anschlag **a.** Nockenpunkt *b2* ist tiefer als Nockenpunkt *a3*.
0° = a0 grösser als b0
45° = a0 grösser als b1
90° = a0 grösser als b2
135° = a1 kleiner als b2
180° = a2 kleiner als b2
225° = a3 kleiner als b2

### Schenkelkopf / Dämpfung der Achsen

Am Schenkelkopf sind für die Funktion wichtige Bauelemente angebracht. Zahnkranzfragment (4,5/Fig a,b,c,q), Präzisionspotentiometer (7,8/Fig a,q), der Wellenkopf (32/Fig a,q) des Stellradmechanismus (16,17/Fig a,e), Walze (39/Fig q) und Lauffläche (41/Fig q), Staublippe (42(/Fig q), sowie die aus Achsenschraube (45/Fig q), Deckel (47/Fig q), Stabilisatorscheiben (44/Fig q), Dämpfungsscheiben (43/Fig q) und Gegenschraube (46/Fig q) bestehende Winkelachse (14,15/Fig b).

Die Walze (39/Fig q), die auf der Lauffläche (41/Fig q) des gegenüberliegenden Schenkels abrollt, ist mit einem Kugellager (40/Fig q) am Rahmen des Schenkels angebracht. In der Walze (39/Fig q) ist mittig eine Bohrung vorhanden, durch welche die Achsenschraube (45/Fig q) mit einem Schraubendreher bei Bedarf eingestellt werden kann. Gleichermassen ist im Mittelpunkt des Rahmenteiles, an dem sich die Lauffläche (41/Fig q) befindet, eine Bohrung vorhanden. Durch sie kann die Gegenschraube (46/Fig q), die in die Achsenschraube (45/Fig q) eingeschraubt wird, angezogen werden, wenn die Einstellung der Achsenschraube (45/Fig q) erfolgt ist. Die Gegenschraube (46/Fig q) sichert die Achsenschraube (45/Fig q) vor unbeabsichtigtem Lösen.

Auf der Achsenschraube (45/Fig q) sind abwechselnd Stabilisatorscheiben (44/Fig q) und Dämpfungsscheiben (43/Fig q) angebracht. Die Stabilisatorscheiben (44/Fig q) stabilisieren die Verfügung der Achsenschraube (45/Fig q) im Kern des Zahnkranzfragmentes (4,5/Fig a,b,c,q) sowie die daran angebrachten Führungshülsen (6/Fig b,c). Die Dämpfungsscheiben (43/Fig q) dämpfen die Messbewegung zwischen Winkelachse (14,15/Fig b) und Zahnkranzfragment (4,5/Fig a,b,c,q). Sie bestehen aus gummiartigem, dem Verwendungszweck angepassten Material, z.B. Silikon und bilden den Achsenkern (56). Zur Kompression der Dämpfungsscheiben (43/Fig q) wird während der Regulierung der Achsenschraube die Standhöhe des Deckels (47/Fig q) verändert, wodurch zwischen Winkelachse (14,15/Fig b) und Zahnkranzfragment (4,5/Fig a,b,c,q) Reibungskraft entsteht. Diese darf aber nicht grösser sein als die Kraft, die die Standhilfen (9/Fig d) benötigen, um aus den Nockenpunkten (12/Fig c,q) auszurasten.

### Präzisionspotentiometer

Die Präzisierung der Potentiometer (7,8/Fig a,q) kann einerseits durch eine Transmission innerhalb seines Gehäuses, andererseits durch eine mechanische Übersetzung zwischen Zahnkranzfragment (4,5/Fig a,b,c,q) und Zahnkranz(32) zur Achse des Potentiometers(7,8/Fig a,q) erfolgen.

### Laseradapter

Eine Erweiterung des Messbereiches stellt der Laseradapter (34/Fig a,p) dar. Mit ihm können vor Allem Majorwinkelwerte als Innen- und Aussenwinkel in größerer Entfernung und als Linie markiert werden. Er wird mit einem Buchsenstecker (53/Fig p) am Ende des Winkelmessers befestigt. Nach Gebrauch des Laseradapters (34/Fig p) wird die Öffnung im Schenkel mit einer Schraube oder einem Käppchen verschlossen um Eindringen von Schmutz zu unterbinden. Durch die am Buchsenstecker (53/Fig p) angebrachte Klinke (55/Fig p) findet er Halt bei einer Drehung von 180°. Durch die Drehung können Innen- bzw. Aussenwinkel markiert oder gemessen werden. Das Laserlicht tritt durch ein Prisma (50/Fig p) aus dem Schenkel aus, und wird von ihm über eine festgelegte Länge gefächert. Es wird in einer Photonenpumpe (49/Fig p) erzeugt und durch einen flexiblen Lichtwellenleiter (35/Fig p) in einen Koppler (51/Fig p) geleitet, der mit einem Schieber (52/Fig p) umgeschaltet wird, wenn der Laseradapter (34/Fig a,p) um 180° geschwenkt wird, wobei der flexible Lichtwellenleiter (35/Fig p) zur Weiterleitung des Laserlichtes nicht unbedingt erforderlich ist. So können Innenwinkel und Aussenwinkel in grösserer Entfernung markiert werden. Der Koppler (51/Fig p) ist nach innen gekrümmt und an einem Schieber (52/Fig p) befestigt, womit er umgeschaltet wird. In einem Batteriefach (36,54/Fig a,p) können Batterien und Akkus eingelegt werden.

### Wirkungsweise

Die Figuren r bis w veranschaulichen die Wirkungsweise des erfindungsgemäßen Winkelmessers, wobei die jeweiligen Stellungen der Schenkel des zweischenkligen Winkelmessers in den Majorwinkeln 0°, 45°, 90°, 135°, 180° und 225° gezeigt werden.

### Bezugszeichenliste

- (1): Schenkel **a**
- (2): Schenkel **b**
- (3): Brückenelement
- (4): Zahnkranzfragment a
- (5): Zahnkranzfragment b
- (6): Führungshülse
- (7): Präzisionspotentiometer a
- (8): Präzisionspotentiometer b
- (9): Standhilfe
- (10): Spiralfeder
- (11): Kugelkopf
- (12): Nockenpunkt
- (13): Stirnleiste
- (14): Winkelachse a
- (15): Winkelachse b
- (16): Stellradmechanismus a
- (17): Stellradmechanismus b
- (18): Stellrad
- (19): Kapsel
- (20): Nabe
- (21): äußere Trommel
- (22): innere Trommel
- (23): untere Trommel
- (24): Achse Stellradmechanismus
- (25): Spiralfeder
- (26): Wellenadapter
- (27): Wellenfase
- (28): Vorschubdorn
- (29): Mitnehmer (äussere Trommel)
- (30): Fangwinkel (innere Trommel)
- (31): flexible oder Gelenkwelle
- (50): Prisma
- (51): Koppler
- (52): Schieber
- (53): Buchsenstecker
- (54): Stromquelle
- (55): Klinke
- (32): Zahnkranz
- (33): Libelle
- (34): Laseradapter
- (35): Lichtwellenleiter
- (36): Batteriefach
- (37): Prozessor
- (38): Display 1, Display 2
- (39): Walze
- (40): Kugellager
- (41): Lauffläche
- (42): Staublippe
- (43): Dämpfungsscheibe
- (44): Stabilisatorscheibe
- (45): Achsenschraube
- (46): Gegenschraube
- (47): Deckel
- (48): Hohlzylinder
- (49): Photonenpumpe

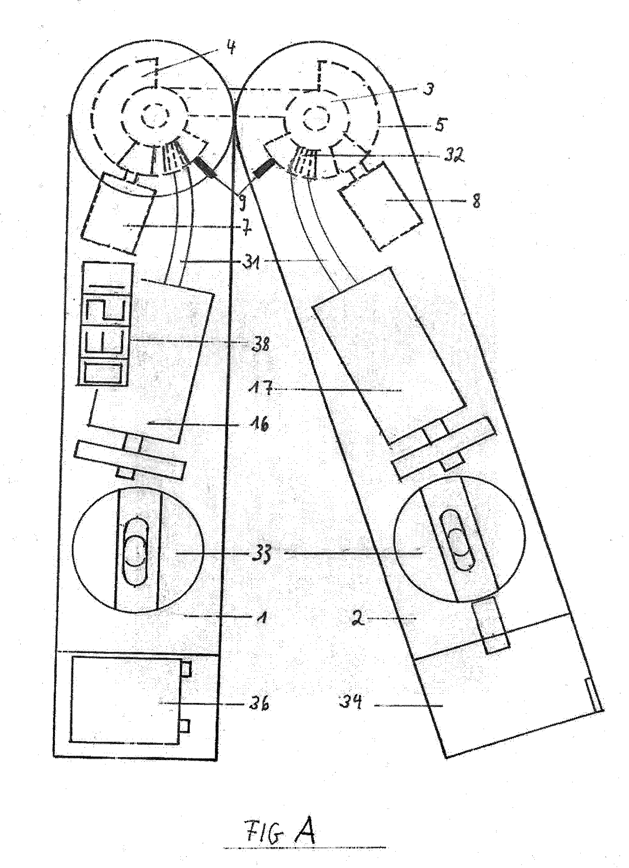

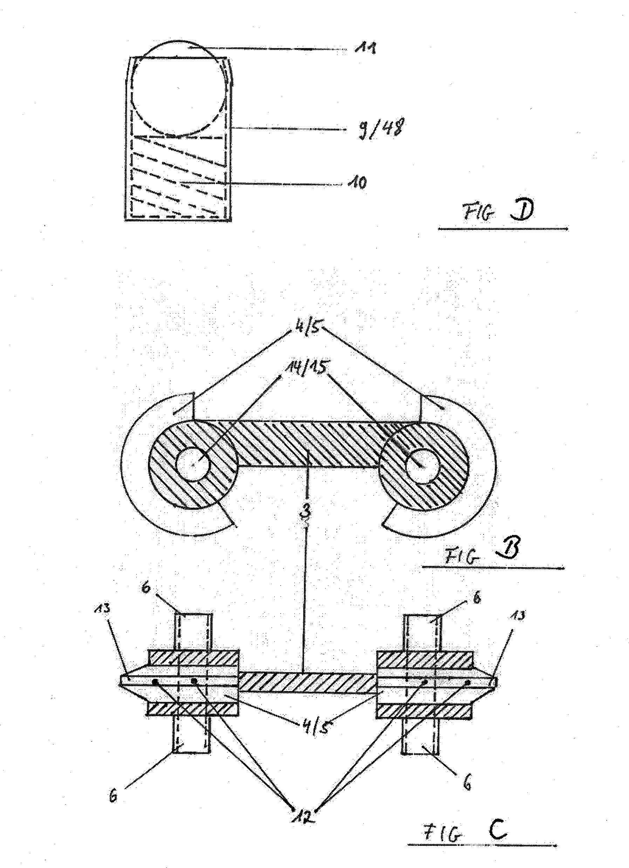

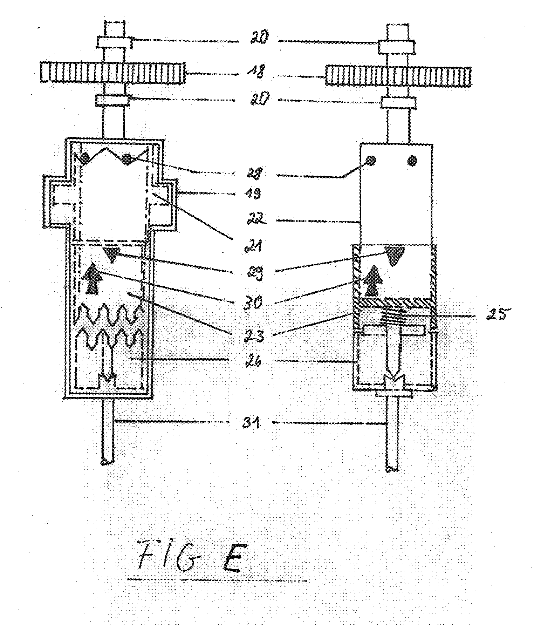

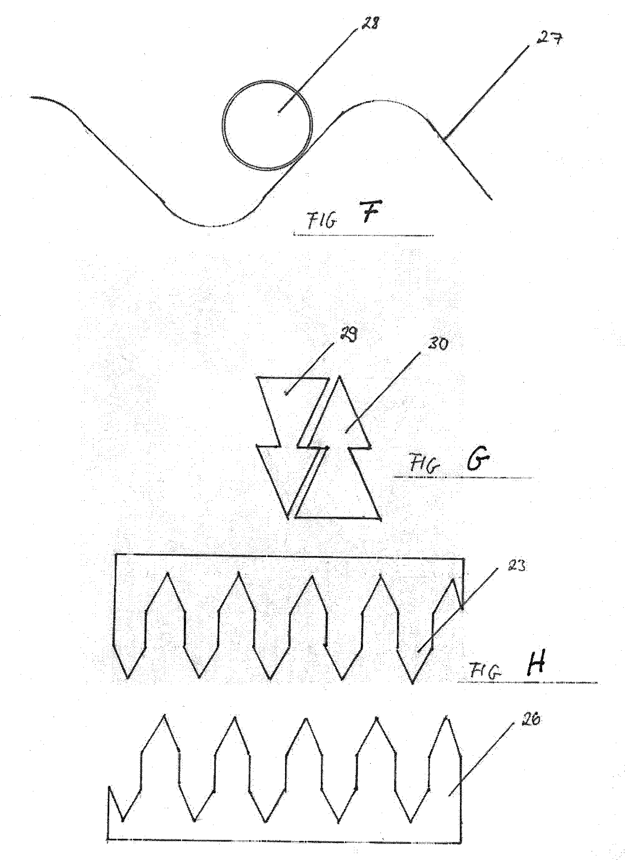

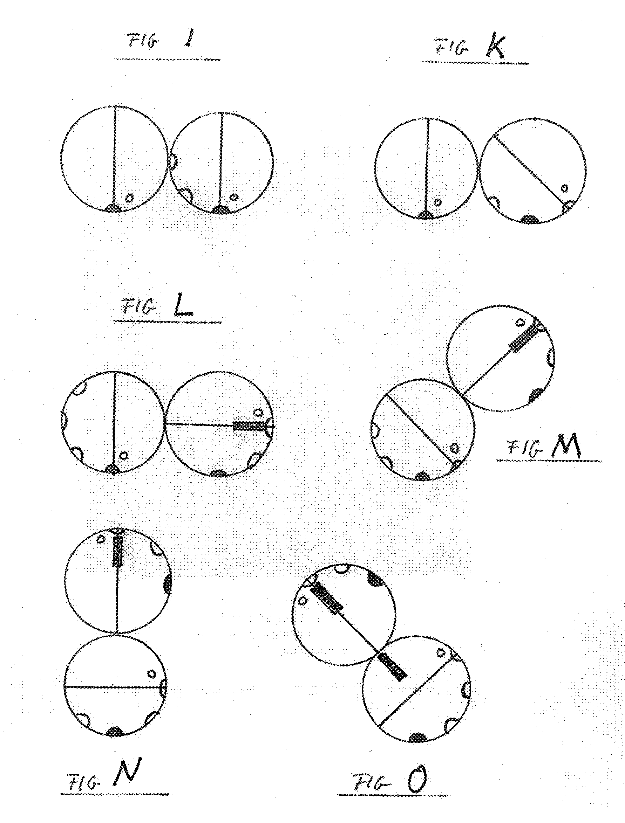

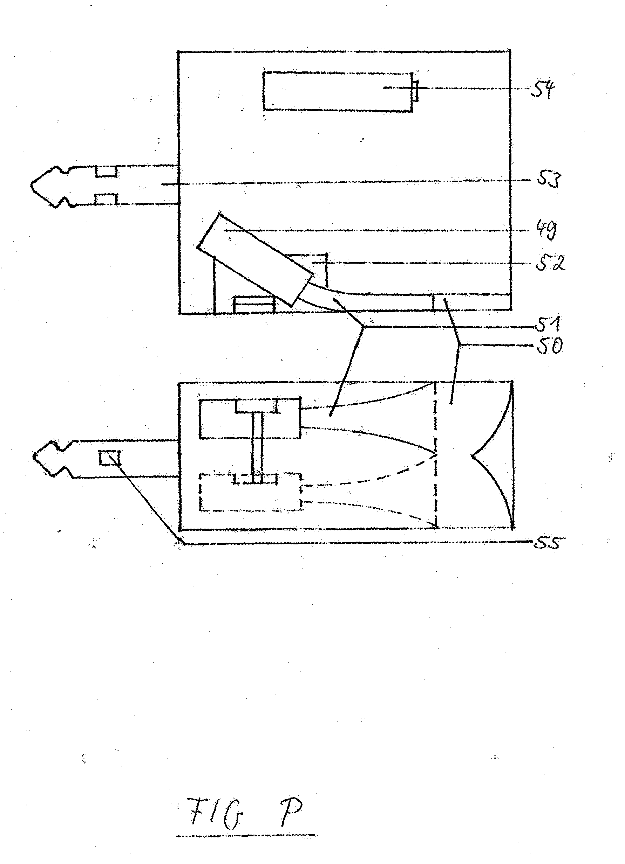

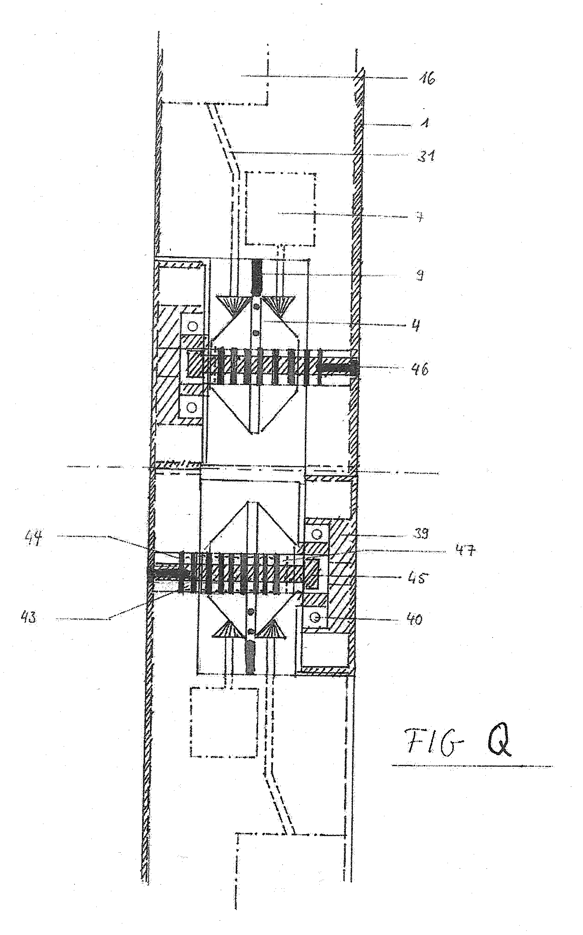

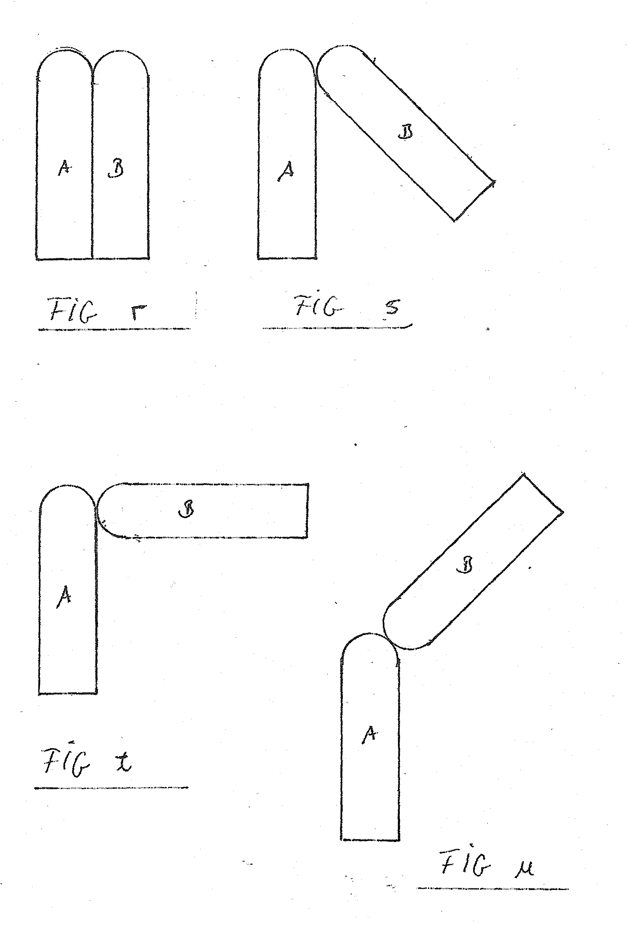

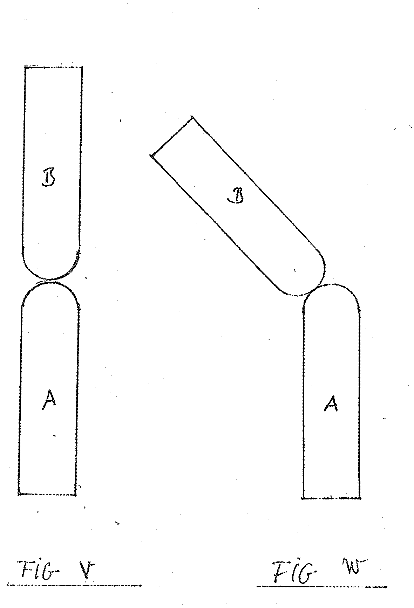

## Patentansprüche

1. Zweischenkliger Winkelmesser der folgendes umfasst:
- zwei Messschenkel (1,2/Fig q) mit denen die zu messenden Winkel abgegriffen werden,
- ein Brückenelement (3/Fig a,b,c,q) mit zwei Köpfen, das beide Messschenkel (1,2/Fig a,q) miteinander verbindet und für die Bildung von Winkeln verantwortlich ist,
- zwei Zahnkranzfragmente (4,5/Fig a,b,c,q ), die auf den Schenkelachsen und an dem Brückenelement (3/Fig a,b,c,q ) angebracht sind und zusammen mit
- zwei Präzisionspotentiometern (7,8/Fig a,q) die die relative Bewegung zwischen Brückenelement (3/Fig a,b,c,q) und den Messschenkeln (1,2/Fig a,q) messbar machen,
- in jedem Messschenkel (1,2/Fig a,q) einen Stellradmechanismus (16,17/Fig a,e,q ) mit dem die gewünschte Winkelzahl von Hand feinjustiert wird,
- einen Prozessor (37), der die ermittelten Messwerte bearbeitet und an die Displays (38/Fig a) weiterleitet,
- mindestens ein Display (38/Fig a ) zum Darstellen des ermittelten Winkelwertes,
- in jedem Messschenkel (1,2/Fig a,q) einen Achsenkern, bestehend aus mehreren Stabilisatorscheiben (Fig q/44), mehreren Dämpfungsscheiben (Fig q/43), einer Achsenschraube (Fig q/45), einer Gegenschraube (Fig q/46) und einem Deckel(Fig q/47 zur Dämpfung der relativen Bewegung der Achsen,
- ein Batteriefach zur Unterbringung der Stromquelle (36/54),
- mindestens zwei Standhilfen (9/Fig a,d,q),
- mindestens zwei Nockenpunkte (12/Fig c,q ), die an der Stirnleiste (13/c,q) der Zahnkranzfragmente (4,5/Fig a,b,c ) angebracht sind und in die die Standhilfen (9/Fig a,d,q) einrasten, wenn sie den Nockenpunkt (12/c,q) auf einem Majorwinkel erreichen und ausrasten, wenn sie ihn wieder verlassen, und
- an jedem Messschenkel (1,2/Fig a q) eine Walze (39/Fig q ) mit der er über die Lauffläche (41) des anderen abrollt.

2. Zweischenkliger Winkelmesser nach Anspruch 1., **dadurch gekennzeichnet, dass** der Stellradmechanismus (16,17/Fig a,e,q) ein Stellrad (18/Fig a,e) zur Einstellung der gewünschten Winkel per Hand aufweist.

3. Zweischenkliger Winkelmesser nach Anspruch 1.-2., **dadurch gekennzeichnet, dass** der Stellradmechanismus (16,17/Fig a,e,q) eine innere Trommel (22/Fig e), eine äussere Trommel (21/Fig e) und eine untere Trommel(23/Fig e) aufweist.

4. Zweischenkliger Winkelmesser nach Anspruch 1.-3., **dadurch gekennzeichnet. dass** der Stellradmechanismus (16,17/Fig a,e,q) einen Wellenadapter (26/ Fig e) aufweist.

5. Zweischenkliger Winkelmesser nach Anspruch 1.-4., **dadurch gekennzeichnet, dass** der Wellenadapter (26/Fig e) an der Kapsel (19/Fig e) mit einem Kugellager (40/Fig e) befestigt ist.

6. Zweischenkliger Winkelmesser nach Anspruch 1.-5., **dadurch gekennzeichnet, dass** der Stellradmechanismus (16,17/Fig a,e,q) eine Gelenkwelle oder biegsame Welle (31/Fig a,q) aufweist.

7. Zweischenkliger Winkelmesser nach Anspruch 1.-6., **dadurch gekennzeichnet, dass** an der Stirnseite der inneren Trommel (22/Fig e) ein oder mehrere Vorschubdorne (28/Fig e,f) mit denen die äussere Trommel (21/Fig e) vorgeschoben wird, angebracht sind.

8. Zweischenkliger Winkelmesser nach Anspruch 1.-7., **dadurch gekennzeichnet, dass** die äußere Trommel (21/Fig e) eine wellenförmige Fase (27/Fig e,f) aufweist, an der die Vorschubdorne (28/Fig e,f) entlang bewegt werden und diese **dadurch** vorschieben.

9. Zweischenkliger Winkelmesser nach Anspruch 1.-8., **dadurch gekennzeichnet, dass** an der Innenseite der äusseren Trommel (21/Fig e) ein oder mehrere Mitnehmer (29/Fig e,g) angebracht sind.

10. Zweischenkliger Winkelmesser nach Anspruch 1.-9., **dadurch gekennzeichnet, dass** an der Aussenseite der inneren Trommel (22/Fig e) ein oder mehrere Fangwinkel (30/Fig e,g), mit denen die Mitnehmer (29/Fig e,g) eingefangen werden, angebracht sind.

11. Zweischenkliger Winkelmesser nach Anspruch 1.-10.,**dadurch gekennzeichnet, dass** die äussere Trommel (21/Fig e) parallel zur Achse beweglich ist.

12. Zweischenkliger Winkelmesser nach Anspruch 1.-11., **dadurch gekennzeichnet, dass** die untere Trommel (23/Fig e) parallel und vertikal zur Achse des Stellradmechanismus (24/Fig e) beweglich ist.

13. Zweischenkliger Winkelmesser nach Anspruch 1.-12., **dadurch gekennzeichnet, dass** die untere Trommel (23/Fig e) durch eine Spiralfeder (gefedert an der Achse (24 u. 25) befestigt ist.

14. Zweischenkliger Winkelmesser nach Anspruch 1.-13., **dadurch gekennzeichnet, dass** untere Trommel (23/Fig e) und Wellenadapter (26/Fig e) an ihren sich gegenüber liegenden Seiten Zähne (Fig h) aufweisen, mit denen sie sich während des Regulierungsvorganges ineinander fügen.

15. Zweischenkliger Winkelmesser nach Anspruch 1.-14., **dadurch gekennzeichnet, dass** die Walze (39/Fig q) durch ein Kugellager (40/Fig q) beweglich an dem Rahmen des jeweiligen Messschenkels (1,2/Fig a,q) angebracht ist.

16. Zweischenkliger Winkelmesser nach Anspruch 1.-15., **dadurch gekennzeichnet, dass** der Achsenkern (56) aus Dämpfungsscheiben (43/Fig q) und Stabilisatorscheiben (44/Fig q), sowie einer Achsenschraube (45/Fig q), einer Gegenschraube (46/Fig) und einem Deckel (47/Fig q) besteht.

17. Zweischenkliger Winkelmesser nach Anspruch 1.-16., **dadurch gekennzeichnet, dass** der Laseradapter (34/Fig a,p ) um 180° schwenkbar ist.

18. Zweischenkliger Winkelmesser nach Anspruch 1.-17., **dadurch gekennzeichnet, dass** das Laseradapter (34/Fig a,p) einen flexiblen Lichtwellenleiter (35/Fig p) aufweist, der in einen Koppler (51/Fig p) mündet.

19. Zweischenkliger Winkelmesser nach Anspruch 1. -18., **dadurch gekennzeichnet, dass** der Koppler (51/Fig p) durch einen Schieber (52/Fig p) umgeschaltet wird, wenn der Laseradapter (34/Fig a,p) um 180° geschwenkt wird.

20. Zweischenkliger Winkelmesser nach Anspruch 1.- 19., **dadurch gekennzeichnet, dass** der Laseradapter (34/Fig a,p) durch einen Buchsenstecker (53/Fig p) am Winkelmesser angebracht wird.

21. Zweischenkliger Winkelmesser nach Anspruch 1.-20., **dadurch gekennzeichnet, dass** am Buchsenstecker (53/Fig p) Klinken (55/Fig p) angebracht sind, die den Laseradapter (34/Fig a,p) bei einer Drehung um 180° in der Buchse stabilisieren.

22. Zweischenkliger Winkelmesser nach Anspruch 1.-21., **dadurch gekennzeichnet, dass** er zwei Displays (38/Fig a ) zum Darstellen des ermittelten Winkelwertes umfasst, die stirn- und rückseitig an Messschenkel **a** (1/Fig a,q) angebracht sind.

23. Zweischenkliger Winkelmesser nach Anspruch 1.-2,2., **dadurch gekennzeichnet, dass** er eine Staublippe (42/Fig q ) zur Abwendung von Schmutz umfasst.

24. Zweischenkliger Winkelmesser nach Anspruch 1.-23., **dadurch gekennzeichnet, dass** in jedem Messschenkel (1,2/Fig a,q) eine Libelle/Wasserwaage (33/Fig a), die zur Unterstützung des Messvorgangs im Bezug zur Horizontalen um 360° drehbar gelagert ist.

25. Zweischenkliger Winkelmesser nach Anspruch 1.-24., **dadurch gekennzeichnet, dass** er einen Laseradapter (34/Fig a,p ) in Schenkel **b** oder **a** und **b** umfasst, mit dem Majorwinkel in größeren Distanzen markiert werden können.

26. Zweischenkliger Winkelmesser nach Anspruch 1.-25., **dadurch gekennzeichnet, dass** die Standhilfen (9/Fig a,d,q) ausgebildet sind, die in Höhe der jeweiligen Majorwinkel 0°,45°,90°, 135°, 180°, 225° Stabilität schaffen.
